(19) Europäisches Patentamt / European Patent Office / Office européen des brevets

(11) **EP 4 618 036 A1**

(12) **EUROPEAN PATENT APPLICATION**
published in accordance with Art. 153(4) EPC

(43) Date of publication:
**17.09.2025  Bulletin 2025/38**

(21) Application number: **23892097.9**

(22) Date of filing: **20.11.2023**

(51) International Patent Classification (IPC):
**G06V 10/774** (2022.01)   **G06V 10/80** (2022.01)
**G06V 10/46** (2022.01)   **G06V 30/19** (2022.01)
**G06N 3/096** (2023.01)   **G06N 3/0455** (2023.01)
**G06N 3/0895** (2023.01)

(52) Cooperative Patent Classification (CPC):
**G06N 3/0455; G06N 3/0499; G06N 3/0895;
G06N 3/096; G06V 10/46; G06V 10/774;
G06V 10/80; G06V 30/19**

(86) International application number:
**PCT/KR2023/018712**

(87) International publication number:
**WO 2024/107035 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022  KR 20220155092**

(71) Applicant: **LG Management Development Institute
Co., Ltd.
Seoul 07336 (KR)**

(72) Inventors:
• **KIM, Bum Soo
Seoul 07796 (KR)**
• **KIM, Jin Hyung
Seoul 07796 (KR)**
• **LEE, Si Haeng
Seoul 07796 (KR)**
• **KIM, Seung Hwan
Seoul 07796 (KR)**
• **LEE, Hong Lak
Seoul 07796 (KR)**
• **BAE, Kyung Hoon
Seoul 07796 (KR)**

(74) Representative: **BCKIP Part mbB
MK1
Landsbergerstraße 98, 3.Stock
80339 München (DE)**

(54) **METHOD AND SYSTEM FOR PRE-TRAINING VISION TRANSFORMER THROUGH KNOWLEDGE DISTILLATION, AND VISION TRANSFORMER PRE-TRAINED THROUGH SAME**

(57)    Disclosed is a method and system for pretraining vision transformers using large uncurated datasets in a self-supervised learning manner according to a knowledge distillation framework, thereby reducing data processing overhead and rapidly training simplified vision transformers.

**FIG. 4**

**Description**

[TECHNICAL FIELD]

The present disclosure relates to a method and system for pretraining a vision transformer through knowledge distillation, and a vision transformer pretrained through the same.

[BACKGROUND ART]

Recently, with the emergence of vision-language pretraining (VLP) models pretrained for large-scale general domain data, AI-based computer vision processing technology has been rapidly developing.

In particular, vision transformers trained with large-scale image-text datasets using techniques such as global self-attention and contrastive language-image pretraining, as in prior art document 2, have shown innovative progress in downstream tasks for various and difficult vision tasks.

However, in order to completely train global self-attention, which is mainly driven by vision transformers, large-scale datasets are required, and there is a problem of excessive data processing overhead.

Meanwhile, prior art document 1 proposes a framework using token sparsification as a method for accelerating pretraining of vision transformers. However, prior art document 1 is only applicable to supervised learning pipelines with predefined labels (e.g., classification, detection, or dense prediction) and has a problem that it is not suitable for pretraining unexplored text-images with self-supervision.

(Prior Art Document)

(Patent Document 1) Prior Art Document 1: Youwei Liang, Chongjian GE, Zhan Tong, Yibing Song, Jue Wang, and Pengtao Xie. EVit: Expediting vision transformers via token reorganizations. In International Conference on Learning Representations, 2022.

(Patent Document 2) Prior Art Document 2: Alec Radford, Jong Wook Kim, Chris Hallacy, Aditya Ramesh, Gabriel Goh, Sandhini Agarwal, Girish Sastry, Amanda Askell, Pamela Mishkin, Jack Clark, Gretchen Krueger, Ilya Sutskever. Learning Transferable Visual Models From Natural Language Supervision, on 26 Feb 2021

[DETAILED DESCRIPTION OF INVENTION]

[TECHNICAL PROBLEMS]

The present disclosure provides a vision transformer pretraining method and system for reducing data processing overhead and rapidly training a simplified vision transformer by pretraining the vision transformer with large uncurated datasets in a self-supervised learning manner.

Specifically, according to an embodiment of the present disclosure, a vision transformer pretraining method and system for performing image-text misalignment, which may occur when an existing token sparsification framework is applied to contrastive language-image pretraining, in a self-supervised learning manner are provided.

More specifically, according to an embodiment of the present disclosure, a vision transformer pretraining method and system including a knowledge distillation framework for contrastive image-text pretraining capable of solving data efficiency problems caused by token sparsification are provided.

In addition, according to an embodiment of the present disclosure, a vision transformer pretrained in this manner is used to provide a variety of vision tasks and applications including vision tasks.

[TECHNICAL SOLUTION]

A vision transformer pretraining method and system according to an embodiment of the present disclosure adopt a knowledge distillation framework that performs pretraining in such a manner that a student encoder learns image-text alignment matrices for a teacher encoder.

Specifically, the knowledge distillation framework according to an embodiment of the present disclosure perform pretraining in a knowledge distillation manner such that alignment matrices for image-text feature representations for a text encoder 10 and a teacher encoder and alignment matrices for image-text feature representations for the text encoder 10 and a student encoder match each other, thereby efficiently extracting knowledge with the simplified student encoder compared to the teacher encoder and alleviating image-text misalignment that naturally exist in a large-scale dataset.

Here, the student encoder according to an embodiment of the present disclosure can improve data learning acceleration and image-text matching efficiency by including a token sparsification layer.

**[EFFECT OF INVENTION]**

According to the method and system for pretraining a vision transformer according to the knowledge distillation framework according to an embodiment of the present disclosure, it is possible to rapidly pretrain a vision transformer with a large-scale unselected image-text pair dataset while reducing data processing overload.

Furthermore, according to the method and system for pretraining a vision transformer according to the knowledge distillation framework according to an embodiment of the present disclosure, a lightweight vision transformer can be pretrained through knowledge distillation.

In addition, according to the method and system for pretraining a vision transformer according to the knowledge distillation framework according to an embodiment of the present disclosure, the image-text misalignment problem can be solved through token sparsification, and data can be processed more rapidly.

Furthermore, the vision transformer pretrained according to the knowledge distillation framework according to an embodiment of the present disclosure can exhibit excellent effects in various vision tasks. In particular, the vision transformer according to an embodiment of the present disclosure can efficiently determine patch tokens with high attention and have excellent performance in image segmentation.

**[BRIEF DESCRIPTION OF THE DRAWING]**

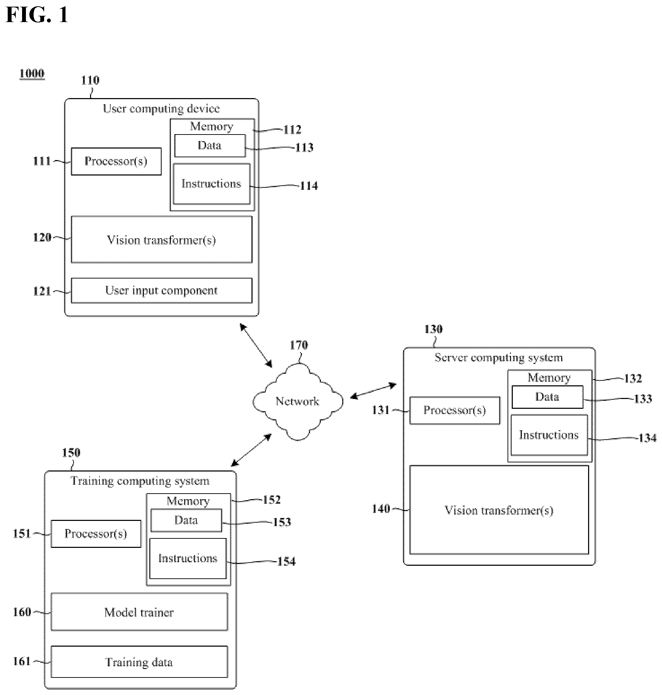

FIG. 1 illustrates an example of a block diagram of a computing system for performing expediting contrastive language-image pretraining (ECLIPS) of a vision transformer according to a knowledge distillation framework according to an embodiment of the present disclosure and executing the pretrained vision transformer.

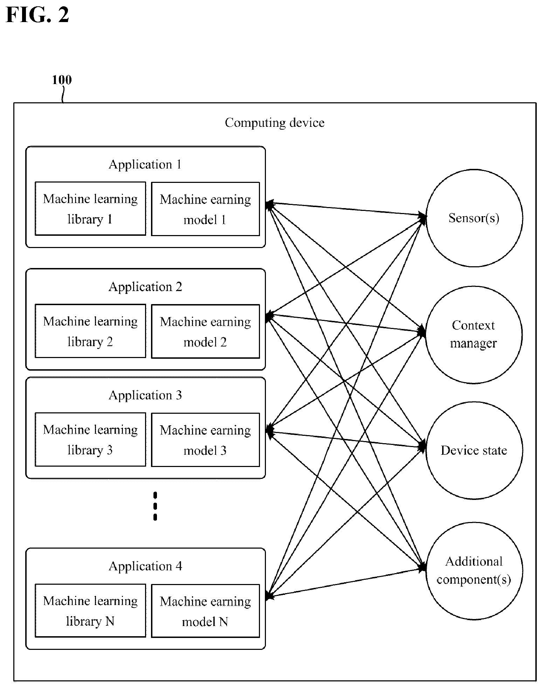

FIG. 2 illustrates an example of a block diagram of a computing device for performing expediting contrastive language-image pretraining (ECLIPS) of a vision transformer according to a knowledge distillation framework according to an embodiment of the present disclosure and executing the pretrained vision transformer.

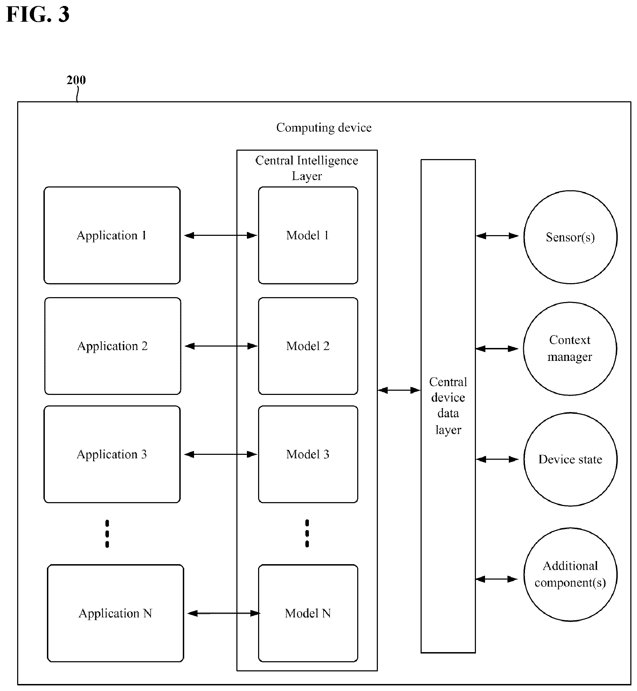

FIG. 3 illustrates an example of a block diagram of another aspect of a computing device for performing expediting contrastive language-image pretraining (ECLIPS) of a vision transformer according to a knowledge distillation framework according to an embodiment of the present disclosure and executing the pretrained vision transformer.

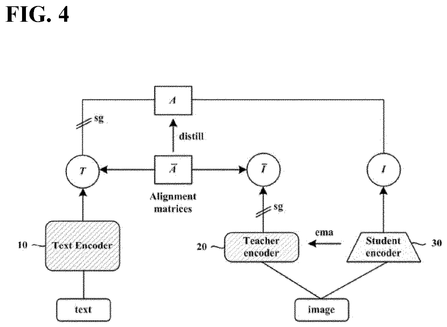

FIG. 4 is a conceptual diagram of a method of pretraining a vision transformer through a knowledge distillation framework according to an embodiment of the present disclosure.

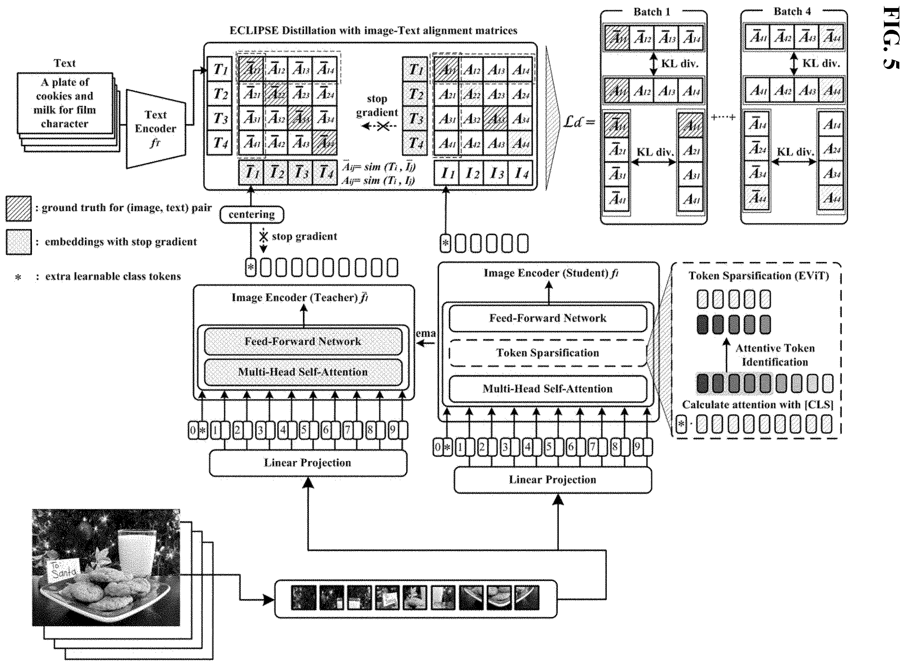

FIG. 5 illustrates a meta-architecture of a framework for pretraining a vision transformer through knowledge distillation according to an embodiment of the present disclosure.

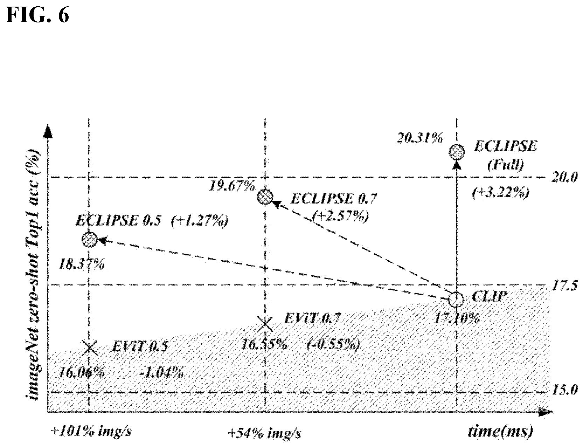

FIG. 6 is a graph showing comparison between the pretraining method and the pretrained vision transformer according to an embodiment of the present disclosure and an existing pretraining method and model to exhibit the effects of the pretraining method and the pretrained vision transformer according to an embodiment of the present disclosure.

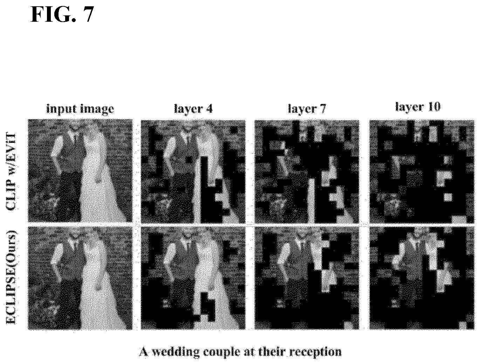

FIG. 7 is a diagram comparing attention tokens in deep layers of the vision transformer pretrained according to an embodiment of the present disclosure and an existing vision transformer.

**[BEST MODE FOR CARRYING OUT THE INVENTION]**

The present disclosure can be modified in various ways and has various embodiments, and thus specific embodiments are illustrated in the drawings and described in detail in the detailed description. The effects and features of the present disclosure and the methods for achieving the same will become clear with reference to the embodiments described in detail below together with the drawings. However, the present disclosure is not limited to the embodiments disclosed below, but can be implemented in various forms. In the following embodiments, the terms "first", "second", etc. are not used in a limiting sense, but are used for the purpose of distinguishing one component from another component. In addition, the singular expression includes the plural expression unless the context clearly indicates otherwise. The terms "include" or "have" mean that features or components described in the specification are present, and do not preemptively exclude the possibility that one or more other features or components may be added. In addition, the sizes of components in the drawings may be exaggerated or reduced for the convenience of explanation. For example, the sizes and thicknesses of each component shown in the drawings are arbitrarily shown for the convenience of explanation, and therefore the present disclosure is not necessarily limited to what is shown.

FIG. 1 illustrates an example of a block diagram of a computing system that pretrains a vision transformer through a knowledge distillation framework according to an embodiment of the present disclosure and executes an application including the pretrained vision transformer.

Referring to FIG. 1, a computing system 1000 according to an embodiment of the present disclosure includes a user computing device 110, a training computing system 150, and a server computing system 130, and the device and the systems are connected via a network 170 such that they can communicate.

According to various embodiments of the present disclosure, 1) the user computing device 110 may pretrain a vision transformer 120 locally and execute an application including the trained vision transformer 120, 2) the server computing system 130 communicating with the user computing device 110 may pretrain a vision transformers 120 or/and 140 and provide the vision transformer 120 or/and 140 or an application including the vision transformer 120 or/and 140 to the user computing device 100 directly or in the form of a web service, and 3) the user computing device 110 and the server computing system 130 may be linked to each other to pretrain the vision transformer 120 or/and 140 or execute the pretrained vision transformer 120 or/and 140 to provide various application services.

In addition, according to various embodiments of the present disclosure, the user computing device 110 and/or the server computing system 130 may train the model 120 through interaction with the training computing system 150 connected thereto via the network 170 such that they can communicate. In this case, the training computing system 150 may be separate from the server computing system 130 or may be a part of the server computing system 130.

That is, according to a vision transformer pretraining method according to the embodiment, 1) the user computing device 110 can directly pretrain the vision transformer 120 locally, 2) the server computing system 130 and the user computing device 110 can interact with each other through a network to pretrain the vision transformer, and 3) the separate training computing system 150 can pretrain the vision transformer using various training techniques and learning techniques.

In addition, the training computing system 150 may transmit the pretrained vision transformer 120 or/and 140 to the user computing device 110 or/and the server computing system 130 through a network to provide or/and update the same.

In some embodiments, the training computing system 150 may be a part of the server computing system 130 or a part of the user computing device 110.

In addition, the vision transformer pretraining method and system of the present disclosure may perform additional operations such as fine tuning the pretrained vision transformer and include the pretrained vision transformer in an application that performs various downstream tasks.

The user computing device 110 may include any type of computing device, such as a smartphone, a mobile phone, a digital broadcasting device, a personal digital assistant (PDA), a portable multimedia player (PMP), a desktop, a wearable device, an embedded computing device, and/or a tablet PC.

The user computing device 110 includes at least one processor 111 and a memory 112. Here, the processor 111 may be composed of at least one of a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of electrically connected processors.

The memory 112 may include one or more non-transitory/transitory computer-readable storage media such as a RAM, a ROM, an EEPROM, an EPROM, a flash memory device, a magnetic disk, and a combination thereof, and may include web storage of a server that performs a storage function of memory on the Internet. The memory 112 may store data 113 and instructions 114 necessary for the at least one processor 111 to perform operations such as pretraining the vision transformer 120 or executing an application including the pretrained vision transformer 120.

In an embodiment, the user computing device 110 may store at least one machine learning model (e.g., the vision transformer 120).

Specifically, the vision transformer 120 of an embodiment may be various machine learning models such as a plurality of neural networks (e.g., a deep neural network) or other types of machine learning models including nonlinear models and/or linear models, and may be configured as a combination thereof.

A neural network may include at least one of feed-forward neural networks, recurrent neural networks (e.g., long short-term memory recurrent neural networks), convolutional neural networks, or/and other types of neural networks.

In an embodiment, the user computing device 110 may receive at least one vision transformer 120 from the server computing system 130 through the network 170, store the vision transformer 120 in the memory, and execute the stored vision transformer 120 by the processor 111 to operate an application having various vision-based tasks.

In another embodiment, the server computing system 130 may include at least one machine learning model (e.g., the vision transformer 140), perform operations through the vision transformer 140, and operate in connection with the user computing device 110 in a manner of transmitting/receiving data to/from the user computing device 110 to provide downstream tasks using the vision transformer 140 to a user. For example, the user computing device 110 may perform a downstream task including the vision transformer 140 in such a manner that the server computing system 130 provides output for user input using the vision transformer 140 via the web. In addition, the vision transformer 120 or/and 140 may be implemented such that at least some vision transformers 120 or/and 140 are executed in the user computing device 110 and the remaining are executed in the server computing system 130.

In addition, the user computing device 110 may include at least one input component that detects user input. For example, the user input component may include a touch sensor (e.g., a touch screen or/and a touch pad) that detects a touch of a user input medium (e.g., a finger or a stylus), an image sensor that detects a user's motion input, a microphone that detects user voice, a button, a mouse, and/or a keyboard. Further, the user input component may include an interface and an external controller (e.g., a mouse, keyboard, or the like) if the user input component receives input to the external controller through the interface.

The server computing system 130 includes at least one processor 131 and a memory 132. Here, the processor 131 may be composed of at least one of a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of electrically connected processors.

The memory 132 may include one or more non-transitory/transitory computer-readable storage media such as a RAM, a ROM, an EEPROM, an EPROM, a flash memory device, a magnetic disk, and a combination thereof, and may include web storage of a server that performs a storage function of memory on the Internet. The memory 132 may store data 133 and instructions 134 necessary for the processor 131 to pretrain the vision transformer 140 or perform various vision tasks (e.g., image detection, classification, segmentation, etc.) using the vision transformer 140.

In an embodiment, the server computing system 130 may be implemented including at least one computing device. For example, the server computing system 130 may be implemented in such a manner that a plurality of computing devices operates according to a sequential computing architecture, a parallel computing architecture, or a combination thereof. In addition, the server computing system 130 may include a plurality of computing devices connected through a network.

In addition, the server computing system 130 may store at least one vision transformer 140. For example, the server computing system 130 may include a neural network or/and other multi-layer nonlinear models as the vision transformer 140. Example neural networks may include feedforward neural networks, deep neural networks, recurrent neural networks, and convolutional neural networks.

The training computing system 150 includes at least one processor 151 and a memory 152. Here, the processor 151 may be composed of at least one of a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions, or a plurality of electrically connected processors.

The memory 152 may include one or more non-transitory/transitory computer-readable storage media such as a RAM, a ROM, an EEPROM, an EPROM, a flash memory device, a magnetic disk, and a combination thereof. The memory 152 may store data 153 and instructions 154 necessary for the processor 151 to train a vision transformer.

For example, the training computing system 150 may include a model trainer 160 that pretrains the vision transformer 120 or/and 140 stored in the user computing device 110 or/and the server computing system 130 using various training or learning techniques, such as backpropagation of errors (according to the framework illustrated in FIG. 5).

For example, the model trainer 160 may perform update of one or more parameters of the vision transformer 120 or/and 140 in a backpropagation manner based on a defined loss function.

In some implementations, performing backpropagation of errors may include performing truncated backpropagation through time. The model trainer 160 may perform a number of generalization techniques (e.g., weight reduction, dropout, knowledge distillation, etc.) to improve the generalization ability of the vision transformer 120 or/and 140 being trained.

In particular, the model trainer 160 may train the vision transformer 120 or/and 140 based on a series of training data. The training data may include multi-modal data, such as images, audio samples, text, etc. Examples of image types that can be used include video frames, LiDAR point clouds, X-ray images, computed tomography scans, hyperspectral images, and/or various other forms of images.

Such trainer data, and input data for downstream tasks may be provided by the user computing device 110 or/and the server computing system 130. When the training computing device trains the vision transformer 120 on specific data of the user computing device 110, the vision transformer 120 can be characterized as a personalized model.

The model trainer 160 also includes computer logic utilized to provide a desired function. The model trainer 160 may be implemented as hardware, firmware, and/or software that controls a general-purpose processor. For example, in an embodiment, the model trainer 160 may include a program file stored in a storage device, which is loaded into a memory and executed by one or more processors. In another implementation, the model trainer 160 may include one or more sets of computer-executable instructions stored in a tangible computer-readable storage medium, such as a RAM hard disk or an optical or magnetic medium.

The network 170 may include, but is not limited to, a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (WLAN), a Wide Area Network (WAN), a Personal Area Network (PAN), a Bluetooth network, a satellite broadcast network, an analog broadcast network, and/or a Digital Multimedia Broadcasting (DMB) network.

In general, communication over the network 170 may be performed using any type of wired and/or wireless connection through various communication protocols (e.g., TCP/IP, HTTP, SMTP, and FTP), encodings or formats (e.g., HTML and XML), and/or protection schemes (e.g., VPN, Secure HTTP, and SSL).

FIG. 2 illustrates an example of a block diagram of a computing device that pretrains a vision transformer according to a knowledge distillation framework according to an embodiment of the present disclosure and executes the pretrained vision transformer.

As shown in FIG. 2, the computing device 100 included in the user computing device 110, the server computing system 130, and the training computing system 150 includes a number of applications (e.g., application 1 to application N). Each application may include a machine learning library and one or more vision transformers. For example, the applications may include an image processing (e.g., detection, classification, segmentation, etc.) application, a text messaging application, an email application, a dictation application, a virtual keyboard application, a browser application, a chat-bot application, etc.

In an embodiment, the computing device 100 may include a model trainer 160 for pretraining a vision transformer, and may store and operate the pretrained vision transformer to perform various vision tasks using the vision transformer on input data.

Each application of the computing device 100 may communicate with a number of other components of the computing device 100, such as one or more sensors, a context manager, a device state component, and/or additional components, for example. In an embodiment, each application may communicate with each device component using an API (e.g., a public API). In an embodiment, the API used by each application may be specific to that application.

FIG. 3 illustrates an example of a block diagram of a computing device 200 that pretrains a vision transformer through the knowledge distillation framework according to an embodiment of the present disclosure and executes the pretrained vision transformer.

Referring to FIG. 3, the computing device 200 includes a plurality of applications (e.g., application 1 to application N). Each application may communicate with a central intelligence layer. For example, the applications may include an image processing application, a text messaging application, an email application, a dictation application, a virtual keyboard application, a browser application, etc. In an embodiment, each application may communicate with the central intelligence layer (and models stored therein) using an API (e.g., a common API across all applications).

The central intelligence layer may include a plurality of vision transformers. For example, as illustrated in FIG. 3, at least some of the vision transformers may be provided for each application and managed by the central intelligence layer. In other implementations, two or more applications may share a single vision transformer. For example, in some implementations, the central intelligence layer may provide a single model for all applications. In some implementations, the central intelligence layer may be included within the operating system of the computing device 200 or implemented differently.

The central intelligence layer may communicate with a central device data layer. The central device data layer may be a centralized data storage for the computing device 200. As illustrated in FIG. 3, the central device data layer may communicate with a number of other components of the computing device 200, such as one or more sensors, a context manager, a device state component, and/or additional components, for example. In some implementations, the central device data layer may communicate with each device component using an API (e.g., a private API).

The techniques described herein may refer to not only servers, databases, software applications, other computer-based systems, but also actions taken and information transmitted to or from the aforementioned systems. It will be appreciated that the inherent flexibility of computer-based systems allows for a wide range of possible configurations, combinations, and divisions of work and functionality between and among components. For example, the processes described herein may be implemented using a single device or component, or multiple devices or components operating in combination. Databases and applications may be implemented in a single system or in a distributed system across multiple systems. Distributed components may operate sequentially or in parallel.

Hereinafter, a process through which the computing system 1000 pretrains a vision transformer through a knowledge distillation framework will be described in detail with reference to FIGS. 4 to 6.

The vision transformer described in the present disclosure refers to a vision-language model (VLP) pretrained with a large-scale dataset to represent two heterogeneous data types of vision-language (image-text) pairs.

The vision transformer according to the embodiment may include a single-stream model that transforms input data that combines images and text, and a dual (multi)-stream model that processes image-text through separate encoders.

In the following embodiment, for convenience, a vision transformer having a dual-stream architecture that is pretrained as a contrastive target for a dataset in which images and texts are matched will be described.

The vision transformer pretraining method according to the embodiment may facilitate pretraining of a dataset of contrastive image-text pairs using a self-distilled encoder.

Referring to FIGS. 4 and 5, the vision transformer pretraining architecture according to the embodiment includes a text encoder 10, a teacher image encoder 20, and a student image encoder 30. The student image encoder 30 and the teacher image encoder 20 may include a multi-head self-attention layer and a feed-forward network. The student image encoder 30 may further include a token sparsification layer.

Here, the image-text dataset for pretraining is an uncurated dataset, meaning data on which, for example, labeling or captioning has not been performed.

In the embodiment, in order to clearly verify the efficiency of the vision transformer pretraining method according to the present embodiment, at least one of large-scale open source datasets CC (Conceptual Captions) 3M, YFCC (Yahoo Flickr Creative Commons) 15M, and YFCC15M, 88M may be used as a dataset for pretraining.

In addition, as a downstream dataset for verifying the performance of the pretrained vision transformer according to the present embodiment, zero-shot image-text from Flickr30K or/and MS-COCO may be used.

Thereafter, the computing system 1000 may classify the image-text pairs of the pretraining dataset according to the batch size, map image-text pairs that have already been matched within the batch size into positive pairs, and match text that has been matched positively for other images into negative pairs.

In addition, the computing system 1000 may input text to the text encoder 10 by batch and output text feature representations T.

In addition, the computing system 1000 may patchify images for each batch and input the image patches to the teacher image encoder 20 to output first image feature representations I'. The notation for the overbar will be replaced with '.

Next, the computing system 1000 may generate first alignment matrices A' by mapping the text feature representations T and the first image feature representations I' according to the matched positive pairs and negative pairs.

The computing system 1000 trains the first alignment matrices A' in a similarity contrasting manner (for example, InfoNCE loss (training in a manner to maximize the similarity of positive pairs and minimize the similarity of negative pairs) according to positive/negative criteria to which the output text feature representations T and the image feature representations have been pre-mapped, and may proceed with training with data pairs with hard alignment labels.

At this time, in the computing system 1000, the teacher image encoder 20 may be a momentum teacher with stop gradient model during the process of training the first alignment matrices A' composed of the first image feature representations I' for similarity alignment, and thus the computing system 1000 can block backpropagation sg to the teacher image encoder 20 during similarity alignment.

Specifically, the similarity is the dot product between the image feature representations and the text feature representation T.

Thereafter, the computing system 1000 may be trained according to a loss function such that the spatial distance between positive feature representations becomes closer and the spatial distance between negative feature representations becomes farther for similarity alignment.

That is, the loss function may be defined such that

$$\frac{score(f(x), f(x^{+}))}{Positive\ samples} \gg \frac{score(f(x), f(x^{-}))}{Negaitive\ samples}$$

and contrastive learning may be performed.

For example, as described above, the computing system 1000 may perform training by applying InfoNCE Loss, which is a loss function, to the similarity matrices.

The computing system 1000 may input image patches for each batch to the student image encoder 30 to output second image feature representations I.

At this time, the student image encoder 30 may accelerate pretraining by reconstructing patch tokens including a token sparsity layer.

Specifically, the student image encoder 30 may perform self-attention of an attention value between image patches and discard tokens below a predetermined standard according to the attention value between self-attended image patches.

For example, the student image encoder 30 may discard careless tokens according to a fixed rate (1-x) depending on an attention value between patches of fourth, seventh, and tenth transformer layers among the self-attention layers. Here, $\kappa$ is a token retention rate.

Further, the computing system 1000 may generate second alignment matrices by mapping the text feature representations T and the second image feature representations I that have undergone token sparsification according to matched positive pairs and negative pairs.

Next, the computing system 1000 may perform knowledge distillation such that the second alignment matrices A predict output values of the first alignment matrices A' aligned according to similarity mapping, unlike the existing knowledge distillation method.

That is, the computing system 1000 may perform knowledge distillation in a manner of training the student image encoder 30 to match the second alignment matrices A through soft alignment according to the first alignment matrices A'. At this time, the text encoder 10 may be a momentum teacher with stop gradient model that blocks backpropagation sg to the text encoder 10 during knowledge distillation.

Specifically, the computing system 1000 may perform knowledge distillation such that the second alignment matrices A follow the parameters of the first alignment matrices A'.

Specifically, in the computing system 1000, the second alignment matrices A may update the parameters of the first alignment matrices A' to the exponential moving average (EMA).

The computing system 1000 may repeatedly perform training for the teacher image encoder 20, training for the student image encoder 30, and the parameter update process n times (for example, one to three times). In the process of repeating, the text encoder 10 and the teacher image encoder 20 may prevent backpropagation sg through the stationary gradient to prevent collision between each other.

The calculation process for the above pretraining will be described in detail through specific mathematical expressions below.

Specifically, the function for the momentum teacher image encoder 20 with stationary gradient, the function $\overline{A}_{i,j}$ representing the first alignment matrices A' for the momentum text encoder 10 with stationary gradient, and the function $A_{i,j}$ representing the second alignment matrices A may be defined by the following mathematical expression 1.

[Mathematical expression 1]

$$\overline{A}_{i,j} = sim(T_i, sg(\overline{I}_j)), \quad A_{i,j} = sim\left(sg(T_i), I_j\right)$$

Here, sg is stationary gradient, and $\overline{I}_j = \overline{f}_I\left(x_j^I\right)$ and $I_j = f_I\left(x_j^I\right)$ are image feature representations for a j-th image using the teacher image encoder 20 and the student image encoder 30, respectively, and $T_i = f_T\left(x_i^T\right)$ represent text feature representations T for i-th text.

In addition, $A \in R^{N \times N}$ is alignment matrices for image feature representations and text feature representations, N is the batch size of an image-text pair, and sim means the function for cosine similarity.

As described above, the loss with respect to the first alignment matrices A' can be obtained using the InfoNCE loss (Mathematical expression 2 below).

[Mathematical expression 2]

$$\mathcal{L}_N(A) = -\frac{1}{N} \sum_{i=1}^{N} \log \frac{\exp\left(A_{ii}/\tau\right)}{\sum_{j=1}^{N} \exp\left(A_{ij}/\tau\right)}$$

$L_T = L_N(A)$ is the InfoNCE loss, and InfoNCE loss for $A_{ij} = sim(T_i, I_j)$ in mathematical expression 1 is defined as $L_{CLIP}(\overline{A})$ according to mathematical expression 2.

Next, as described above, the computing system 1000 performs knowledge distillation to predict that the second alignment matrices A match the first alignment matrices A'.

Specifically, when a distillation loss is defined as KL divergence for each row and column between the first alignment matrices A' and the second alignment matrices A, if σ is a softmax function, the KL divergence $D_{KL}(\overline{A}\|A)$ between the first alignment matrices A' and the second alignment matrices A can be expressed as in mathematical expression 3 below, and the distillation loss can be calculated according to mathematical expression 3.

[Mathematical expression 3]

$$D_{\mathrm{KL}}(\bar{A}\|A) = \sum_{i=1}^{N} \sigma(\bar{A}_i) \log \frac{\sigma(A_i)}{\sigma(\bar{A}_i)}$$

Here, the overall distillation loss $L_{distill}(\bar{A},A)$ is the average of the KL loss for each row vector and column vector of the parameters of the first alignment matrices and the parameters of the second alignment matrices, and thus can be defined as in the following mathematical expression 4.

[Mathematical expression 4]

$$\mathcal{L}_{\mathrm{distill}}(\bar{A}, A) = \tfrac{1}{2}(D_{\mathrm{KL}}(\bar{A}\|A) + D_{\mathrm{KL}}(\bar{A}^T\|A^T))$$

In order to accelerate training of the student image encoder 30, if knowledge distillation training and training of the teacher image encoder 20 are balanced, the final loss $L_{student}$ of the student image encoder 30 is defined according to the following mathematical expression 5, and thus the final loss L is defined according to the following mathematical expression 6.

[Mathematical expression 5]

$$\mathcal{L}_{\mathrm{student}} = \lambda \mathcal{L}_{\mathrm{CLIP}}(A) + (1-\lambda)\mathcal{L}_{\mathrm{distill}}(\bar{A}, A)$$

[Mathematical expression 6]

$$\mathcal{L} = \mathcal{L}_{\mathrm{student}} + \mathcal{L}_{\mathrm{CLIP}}(\bar{A})$$

Here, $\lambda$ is a parameter that balances the KL divergence loss and the InfoNCE loss, and is calculated based on the exponential moving average ema in the embodiment.

As described above, the teacher image encoder 20 and the text encoder 10 can perform update through stationary gradients to prevent backpropagation.

Specifically, $\theta_{f_l}$ and $\bar{\theta}_{f_l}$ represent the parameters of the student encoder and the momentum teacher image encoder 20, respectively, and $\bar{\theta}_{f_l}^{(t)}$ can be updated at the t-th step according to the following mathematical expression 7.

[Mathematical formula 7]

$$\bar{\theta}_{f_l}^{(t)} = m\bar{\theta}_{f_l}^{(t-1)} + (1-m)\theta_{f_l}^{(t)}$$

As a result of experiments, the most efficient training can be performed when m is 0.994.

That is, through the process of the above mathematical expressions 1 to 7, the encoders of the vision transformer can be pretrained through contrastive learning and knowledge distillation.

Hereinafter, comparison of the effect of vision transformer pretraining through knowledge distillation according to an embodiment of the present disclosure with those of existing technologies.

For comparison, refer to FIG. 6 showing a graph comparing the conventional pretraining method (EViT) in which token sparsification is applied to the existing contrastive language-image pre-training and the vision transformer pretraining method (ECLIPSE) through knowledge distillation according to the present disclosure.

The vision transformer pretraining method (ECLIPSE) according to the embodiment of the present disclosure trains a simplified vision transformer with processing capacity that is 101% faster than the existing pretraining method (EViT), and it can be confirmed that the performance of the pretrained vision transformer is also relatively excellent in the accuracy of zero-shot images. In addition, it can be confirmed that The vision transformer pretraining method (ECLIPSE) shows superior performance in the pretraining speed, vision transformer capacity, and zero-shot accuracy compared to Contrastive Language-Image Pretraining (CLIP), which is a representative contrastive language-image pre-training model that does not use token sparsification. Here, the backbone used to compare the performances of the models is ViT-B/16.

[Table 1]

| Keep Rate | CLIP Top1 Acc (%) | ECLIPSE Top1 Acc (%) | Throughput (image/s) |
|---|---|---|---|
| 1.0 (=ViT) | **17.10** | **20.32** (+3.22) | 564 |
| 0.9 | 16.82 (-0.28) | 19.41 (+2.31) | 662 (+17%) |
| 0.8 | 16.68 (-0.42) | 19.57 (+2.47) | 758 (+34%) |
| 0.7 | 16.55 (-0.55) | **19.67** (+2.57) | 871 (+54%) |
| 0.6 | 16.32 (-0.78) | 18.80 (+1.70) | 998 (+77%) |
| 0.5 | 16.06(-1.04) | 18.37 (+1,27) | 1132 (+101%) |

More specifically, Table 1 above shows the zero-shot accuracy of the CLIP model and the ECLIPSE model of the present disclosure for ImageNet-1k Top-1. It can be confirmed that the accuracy of the ECLIPSE model is superior to that of the CLIP model.

In particular, referring to FIG. 7, when the attention level for each patch token of the CLIP model and the ECLIPSE model of the present disclosure is calculated, it can be confirmed that the ECLIPSE model more accurately determines patches related to objects (people) that should be carefully observed in an image. That is, it can be confirmed that the ECLIPSE model shows excellent performance in image segmentation tasks through token sparsification

Therefore, the computing system 1000 can perform various vision tasks with efficient and more accurate performance compared to the existing models by using the vision transformer of the present disclosure.

For example, the vision transformer of the present disclosure can perform vision tasks such as image classification, segmentation, object detection, image generation, automatic caption generation, image search, and image description.

In addition, the computing system 1000 can perform various artificial intelligence tasks by executing various applications including the vision transformer that has excellent performance for such vision tasks.

The framework that uses token sparsification and knowledge distillation for such contrastive language-image pretraining can be extended and applied to pretraining for additional modalities, such as audio, at the level of ordinary skilled persons.

The embodiments of the present disclosure described above may be implemented in the form of program instructions that can be executed through various computer components and recorded on a computer-readable recording medium. The computer-readable recording medium may include program instructions, data files, data structures, etc., alone or in combination. The program instructions recorded on the computer-readable recording medium may be those specially designed and configured for the present disclosure or those known to those skilled in the art of computer software and available for use. Examples of the computer-readable recording medium include magnetic media such as hard disks, floppy discs, and magnetic tapes, optical recording media such as CD-ROMs and DVDs, magneto-optical media such as floptical disks, and hardware devices specially configured to store and execute program instructions, such as ROMs, RAMs, and flash memories. Examples of the program instructions include not only machine language codes generated by a compiler, but also high-level language codes that can be executed by a computer using an interpreter or the like. A hardware device may be changed into one or more software modules to perform processing according to the present disclosure, and vice versa.

**[INDUSTRIAL APPLICABILITY]**

The present disclosure provides a method for pretraining a vision transformer through a computing system and a pretrained vision transformer used to perform vision tasks, and thus has industrial applicability.

**Claims**

1. A method of pretraining a vision transformer with a vision-language dataset through knowledge distillation by a computing system including a memory and a processor, comprising:

   acquiring a dataset including a plurality of image-text pairs;
   inputting text of an n-th batch in the acquired dataset to a text encoder to generate text feature representations;
   inputting images of the n-th batch in the acquired dataset to a teacher image encoder to generate first image feature representations;
   inputting the images of the n-th batch in the acquired dataset to a student image encoder to generate second image feature representations;
   generating first alignment matrices for the text feature representations and the first image feature representations;
   learning the first alignment matrices such that the text feature representations and the first image feature representations are aligned to have similarity based on a positive and negative mapping relationship of image-text pairs of the n-th batch; and
   performing knowledge distillation on second alignment matrices to predict output of the learned first alignment matrices,
   wherein the inputting the images of the n-th batch to a student image encoder to generate second feature representations comprises inputting patched image patches to a token sparsification layer based on output values from a plurality of self-attention layers to perform token sparsification.

2. The method of claim 1, wherein the inputting images of the n-th batch to a teacher image encoder to generate first image feature representations comprises:

   patching the images of the n-th batch; and
   generating the first image feature representations through a plurality of self-attention layers and a feed-forward network layer from the patched image patches.

3. The method of claim 2, wherein the inputting the images of the n-th batch to a student image encoder to generate second feature representations comprises inputting the patched image patches to a token sparsification layer based on output values from the plurality of self-attention layers and performing token sparsification.

4. The method of claim 1, wherein the learning the first alignment matrices such that the text feature representations and the first image feature representations are aligned comprises:

   determining a positive feature representation pair and a negative feature representation pair with respect to the text feature representations and the first image feature representations based on the mapping relationship of the image-text pairs; and
   training encoders based on a loss function for allowing a distance between positive feature representation pairs to decrease and allowing a distance between negative feature representation pairs to increase for similarity alignment.

5. The method of claim 4, wherein the learning encoders based on a loss function comprises applying a momentum stationary gradient to the teacher image encoder to block backpropagation during training for similarity alignment based on the loss function.

6. The method of claim 5, wherein the performing knowledge distillation on the second alignment matrices comprises performing knowledge distillation to predict an output value of the first alignment matrices based on the similarity alignment.

7. The method of claim 6, wherein the performing knowledge distillation on the second alignment matrices comprises blocking backpropagation to the text encoder during the knowledge distillation.

8. The method of claim 7, wherein the performing knowledge distillation on the second alignment matrices comprises performing knowledge distillation such that parameters of the second alignment matrices follow parameters of the first alignment matrices.

9. The method of claim 8, wherein the performing knowledge distilling such that parameters of the second alignment matrices follow parameters of the first alignment matrices comprises updating the parameters of the second alignment matrices with an exponential moving average (EMA) of the parameters of the first alignment matrices.

10. The method of claim 1, wherein a distillation loss between a function A' of the first alignment matrices and a function A of the second alignment matrices is KL divergence $D_{KL}(\overline{A}\|A)$, and the KL divergence $D_{KL}(\overline{A}\|A)$ is defined by the following mathematical expression 3.

[Mathematical expression 3]

$$D_{KL}\left(\overline{A}\,\|A\right)=\sum_{i=1}^{N}\sigma\left(\overline{A}_i\right)\log\frac{\sigma(A_i)}{\sigma\left(\overline{A}_i\right)}$$

wherein, $\sigma$ is a softmax function.

11. The method of claim 10, wherein, in the performing knowledge distillation on the second alignment matrices, an overall distillation loss $L_{distill}(\overline{A},A)$ is defined as an average of KL losses for a row vector and a column vector, and is defined as the following mathematical expression 4.

[Mathematical expression 4]

$$L_{distill}\left(\overline{A},A\right)=\frac{1}{2}\left(D_{KL}\left(\overline{A}\,\|A\right)+D_{KL}\left(\overline{A}^T\,\|A^T\right)\right)$$

12. The method of claim 11, wherein a final loss $L_{distill}(\overline{A},A)$ of the student image encoder is defined by the following mathematical expression 5.

[Mathematical expression 5]

$$L_{student}=\lambda L_{CLIP}(A)+(1-\lambda)L_{distill}\left(\overline{A},A\right)$$

wherein $\lambda$ is a parameter for balancing a KL divergence loss and an InfoNCE loss, and is set based on the exponential moving average (ema), and
a final loss L of encoders including the teacher image encoder and the student image encoder is defined by the following mathematical expression 6.

[Mathematical expression 6]

$$L=L_{student}+L_{CLIP}\left(\overline{A}\right)$$

13. The method of claim 12, further comprising performing update through a stationary gradient to prevent backpropagation between the teacher image encoder and the text encoder.

14. A vision task execution model comprising a vision transformer pretrained according to claim 1.

**15.** A vision transformer pretrained through knowledge distillation by a computing system including a memory and a processor, the vision transformer comprising:

a text encoder configured to receive text of an n-th batch to generate text feature representations;

a teacher image encoder configured to receive images of the n-th batch to generate first image feature representations; and

a student image encoder configured to receive the images of the n-th batch to generate second image feature representations,

wherein the vision transformer is trained such that the text feature representations and the first image feature representations are aligned to have similarity to generate first alignment matrices, and

knowledge distillation is performed such that second alignment matrices for the text feature representations and the second image feature representations predict an output value of the first alignment matrices.

# FIG. 1

**FIG. 2**

**FIG. 3**

# FIG. 4

FIG. 5

EP 4 618 036 A1

**ECLIPSE Distillation with image-Text alignment matrices**

Text

A plate of cookies and milk for film character

Text Encoder $f_T$

$T_1$ $\bar{A}_{11}$ $\bar{A}_{12}$ $\bar{A}_{13}$ $\bar{A}_{14}$
$T_2$ $\bar{A}_{21}$ $\bar{A}_{22}$ $\bar{A}_{23}$ $\bar{A}_{24}$
$T_3$ $\bar{A}_{31}$ $\bar{A}_{32}$ $\bar{A}_{33}$ $\bar{A}_{34}$
$T_4$ $\bar{A}_{41}$ $\bar{A}_{42}$ $\bar{A}_{43}$ $\bar{A}_{44}$

$\bar{I}_1$ $\bar{I}_2$ $\bar{I}_3$ $\bar{I}_4$

stop gradient

$T_1$ $A_{11}$ $A_{12}$ $A_{13}$ $A_{14}$
$T_2$ $A_{21}$ $A_{22}$ $A_{23}$ $A_{24}$
$T_3$ $A_{31}$ $A_{32}$ $A_{33}$ $A_{34}$
$T_4$ $A_{41}$ $A_{42}$ $A_{43}$ $A_{44}$

$I_1$ $I_2$ $I_3$ $I_4$

$\bar{A}_{ij} = sim(T_i, \bar{I}_j)$
$A_{ij} = sim(T_i, I_j)$

$\mathcal{L}d =$

**Batch 1**

$\bar{A}_{11}$ $\bar{A}_{12}$ $\bar{A}_{13}$ $\bar{A}_{14}$
KL div.
$A_{11}$ $A_{12}$ $A_{13}$ $A_{14}$

$\bar{A}_{11}$ $\bar{A}_{21}$ $\bar{A}_{31}$ $\bar{A}_{41}$
KL div.
$A_{11}$ $A_{21}$ $A_{31}$ $A_{41}$

$+\cdots+$

**Batch 4**

$\bar{A}_{41}$ $\bar{A}_{42}$ $\bar{A}_{43}$ $\bar{A}_{44}$
KL div.
$A_{41}$ $A_{42}$ $A_{43}$ $A_{44}$

$\bar{A}_{14}$ $\bar{A}_{24}$ $\bar{A}_{34}$ $\bar{A}_{44}$
KL div.
$A_{14}$ $A_{24}$ $A_{34}$ $A_{44}$

: ground truth for (image, text) pair

: embeddings with stop gradient

* : extra learnable class tokens

centering

stop gradient

Image Encoder (Teacher) $\tilde{f}_I$

Feed-Forward Network

Multi-Head Self-Attention

0 * 1 2 3 4 5 6 7 8 9

Linear Projection

ema

Image Encoder (Student) $f_I$

Feed-Forward Network

Token Sparsification

Multi-Head Self-Attention

0 * 1 2 3 4 5 6 7 8 9

Linear Projection

**Token Sparsification (EViT)**

Attentive Token Identification

Calculate attention with [CLS]

*

**FIG. 6**

FIG. 7

A wedding couple at their reception

## INTERNATIONAL SEARCH REPORT

| International application No. |
|---|
| **PCT/KR2023/018712** |

### A. CLASSIFICATION OF SUBJECT MATTER

**G06V 10/774**(2022.01)i; **G06V 10/80**(2022.01)i; **G06V 10/46**(2022.01)i; **G06V 30/19**(2022.01)i; **G06N 3/096**(2023.01)i; **G06N 3/0455**(2023.01)i; **G06N 3/0895**(2023.01)i

According to International Patent Classification (IPC) or to both national classification and IPC

### B. FIELDS SEARCHED

Minimum documentation searched (classification system followed by classification symbols)

G06V 10/774(2022.01); G06F 40/289(2020.01); G06F 40/30(2020.01); G06K 9/62(2006.01); G06N 3/08(2006.01); G06V 10/26(2022.01); G06V 10/74(2022.01); G06V 10/764(2022.01); G06V 20/10(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비전 트랜스포머(vision transformer), 사전 훈련(pretraining), 인코더 (encoder), 정렬 메트릭(alignment metric)

### C. DOCUMENTS CONSIDERED TO BE RELEVANT

| Category* | Citation of document, with indication, where appropriate, of the relevant passages | Relevant to claim No. |
|---|---|---|
| A | CN 112990296 A (CAS-ARTIFICIAL INTELLIGENCE INNOVATION TECHNOLOGY RESEARCH INSTITUTE (QINGDAO) CO., LTD.) 18 June 2021 (2021-06-18)<br>See claims 1-2 and figures 1-2. | 1-15 |
| A | CN 113869048 A (GUANGZHOU HUADUO NETWORK TECHNOLOGY CO., LTD.) 31 December 2021 (2021-12-31)<br>See paragraphs [0097]-[0098] and figures 1-2. | 1-15 |
| A | KR 10-2022-0134403 A (KOREA ADVANCED INSTITUTE OF SCIENCE AND TECHNOLOGY) 05 October 2022 (2022-10-05)<br>See paragraphs [0070]-[0071], claim 1 and figures 1-4. | 1-15 |
| A | CN 115223049 A (SHANDONG UNIVERSITY et al.) 21 October 2022 (2022-10-21)<br>See claim 1 and figures 1-3. | 1-15 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2024** | **15 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/018712**

| C. | DOCUMENTS CONSIDERED TO BE RELEVANT | |
|---|---|---|
| Category* | Citation of document, with indication, where appropriate, of the relevant passages | Relevant to claim No. |
| A | CN 115331009 A (XI'AN UNIVERSITY OF TECHNOLOGY) 11 November 2022 (2022-11-11)<br>See claim 1 and figures 1-4. | 1-15 |

Form PCT/ISA/210 (second sheet) (July 2022)

**INTERNATIONAL SEARCH REPORT**
Information on patent family members

| International application No. |
|---|
| **PCT/KR2023/018712** |

| Patent document<br>cited in search report | Publication date<br>(day/month/year) | Patent family member(s) | Publication date<br>(day/month/year) |
|---|---|---|---|
| CN 112990296 A | 18 June 2021 | CN 112990296 B | 11 October 2022 |
| CN 113869048 A | 31 December 2021 | None | |
| KR 10-2022-0134403 A | 05 October 2022 | KR 10-2022-0016766 A | 10 February 2022 |
| | | KR 10-2558096 B1 | 24 July 2023 |
| | | KR 10-2620789 B1 | 05 January 2024 |
| | | US 2022-00036564 A1 | 03 February 2022 |
| | | US 2022-00309661 A1 | 29 September 2022 |
| CN 115223049 A | 21 October 2022 | CN 115223049 B | 13 December 2022 |
| CN 115331009 A | 11 November 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOUWEI LIANG** ; **CHONGJIAN GE** ; **ZHAN TONG** ; **YIBING SONG** ; **JUE WANG** ; **PENGTAO XIE**. EVit: Expediting vision transformers via token reorganizations. *In International Conference on Learning Representations*, 2022

- **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK**. *Learning Transferable Visual Models From Natural Language Supervision*, 26 February 2021